# EUROPEAN PATENT APPLICATION

(11) **EP 1 317 117 A1**
(43) Date of publication of application: **04.06.2003**
(21) Application number: 02026508.8
(22) Date of filing: 27.11.2002
(51) Int. Cl.: H04M 1/247, H04M 3/493

(54) **Interactive voice response system that enables an easy input in menu option selection**

(30) Priority: 28.11.2001 JP 2001362210
(71) Applicant: MATSUSHITA ELECTRIC INDUSTRIAL CO., LTD, Kadoma-shi, Osaka 571-0000 (JP)
(72) Inventor: Tanaka, Nobuaki, Kawasaki-shi, Kanagawa 211-0051 (JP); Uranaka, Hiroshi, Tokyo 113-0021 (JP); Maruyama, Tomoaki, Utsunomiya-shi, Tochigi 320-0851 (JP)
(74) Representative: Casalonga, Axel

(57) **Abstract**

An interactive voice response system including a terminal and a center apparatus is disclosed. The terminal has a ten-key pad having a plurality of keys, which are so arranged as to emit lights in response to a control signal. The apparatus has a voice response program including one or more menus. The apparatus sends an audio guide for one of the menus to the terminal. The audio guide comprises audio option guides for menu options of the menu. The menu options and corresponding key IDs are extracted from the audio guide and sent to the terminal. Then, the menu options and the corresponding key IDs are displayed on a display device. The terminal also causes keys of the corresponding key IDs to emit lights. In response to an input of one of the keys, a signal associated with the key is sent to the apparatus.

## Description

### BACKGROUND OF THE INVENTION

### 1. Field of the Invention

The invention relates to an interactive voice response system for providing a service that meets the user's needs through a dialogue with the user and, more specifically, to an input support subsystem for facilitating a user's input operation for selection from the options of a menu presented in such an interactive voice response system.

### 2. Description of the Prior Art

Such an interactive voice response system is disclosed in Japanese patent application publication No. Hei5-236146. In this system, once a user dials a voice response center and the call to the voice response center is established, the voice response center provides a series of voice guides to cause the user to input various information such as the user's ID and an answer to a question confirmative of the user's input and to select one of the options of each of audio menus presented by the voice response center.

However, in such conventional interactive voice response systems, since the possible menu options are not shown, the user has to listen to an entire audio menu and temporary memorize the presented audio menu options in order to select a desired menu option. Further, since the user can know the correspondence between each menu option and a corresponding key only from audio information, it may sometimes the case that the user cannot see which key the menu option he or she is listening to is associated with.

These problems seem to be solved to a certain extent by "Graphical voice response system and method therefore" disclosed in U.S. Patent No.6,104,790. In this system, a calling party which is a screen phone dials a called party to have a phone menu file transferred from the called party. In the screen phone, each option in the current menu is shown as an actuator (e.g., button) with either a graphical icon on the button or text on the button indicating the function of the button. This enables the user to actuate (e.g., "click on") any button the user chooses.

However, in just-mentioned system, a selection has to be done by operating any pointing device or some operations of any arrow key and a return key. If the user terminal is provided with some pointing device, this causes almost no problem. Otherwise, some key operations are required for an option selection in each menu.

Further, in order to construct a system for providing an interactive voice response (IVR), it has been necessary for a professional programmer to make an IVR program. However, a language has been designed for creating audio dialogs that feature synthesized speech, digitized audio, recognition of spoken and DTMF key input, recording of spoken input, telephony, and mixed-initiative conversations and has begun to be proactively used. The language is called "VoiceXML". If such a language (hereinafter, referred to as "IVRA programming language", which is an abbreviation of an interactive voice response application programming language) is used, it is easy to make an IVR program, which we call an "IVR script" or "IVR document". An IVR service is provided by making a dedicated interpreter execute the IVR script in response to an incoming call from a user or customer.

The present invention has been made in view of the above-mentioned problems.

What is needed is an IVRA language-based interactive voice response system that enables an easy input operation for selection from the options of a presented audio menu.

What is needed is an IVRA language-based interactive voice response center apparatus that facilitates the user's input operation in selection from the options of a presented audio menu.

What is needed is a terminal device that has a communication capability and is operable in concert with an interactive voice response center apparatus that facilitates the user's input operation in selection from the options of a presented audio menu.

What is needed is a device provided with an IVRA language-based interactive voice response system that facilitates the user's input operation in selection from the options of a presented audio menu.

### SUMMARY OF THE INVENTION

According to an aspect of the invention, a center apparatus for providing an interactive voice response associated with a key input by a user at a terminal device via communication medium is provided. The center apparatus comprises: means for communicating with the terminal device; voice sending means for send a voice signal corresponding to a given data to the terminal device through the communication means; means for storing a voice response script that describes a procedure of the interactive voice response, the voice response script including at least one menu portion which permits the user to select one of menu options; means for storing software means for interpreting and executing the voice response script; and control means responsive to a call from the terminal device for establishing the call and controlling the software means to execute the voice response script, wherein the software means includes: audio guide sending means for causing an audio guide for one of the at least one menu to be transmitted to the terminal device, the audio guide comprising audio option guides for menu options of the one menu; and option sending means for extracting option information for each menu option from the menu portion and causing the extracted option information to be transmitted to the terminal device. By doing this, the terminal device can display the extracted option information for each menu option on a display screen and cause the keys identified by respective key IDs included in the option information to emit lights.

According to another aspect of the invention, there is provided a communication device capable of communicating a voice and data with an apparatus for interactively providing a voice response associated with one of menu options of one of at least one menu. The communication device comprises: means for dialing a desired destination, the dialing means including at least a ten key pad having a plurality of keys, the keys being so arranged as to emit lights in response to a control signal; a display device for displaying at least characters; audio output means for providing an audio output in response to a given signal; receiving means for receiving menu options of the one menu and corresponding key IDs; and displaying means for displaying the menu options and the corresponding key IDs on the display device; light emitting means for causing keys of the corresponding key IDs to emit lights; and means, responsive to an input of one of keys, for sending a signal associated with the key to the apparatus.

### BRIEF DESCRIPTION OF THE DRAWING

Further objects and advantages of the present invention will be apparent from the following description of the preferred embodiments of the invention as illustrated in the accompanying drawing, in which:
FIG. 1 is a schematic diagram showing an interactive voice response system of the invention;
FIG. 2 is diagram showing an exemplary structure of a voice response program 414 of FIG. 1;
FIG. 3 is a schematic block diagram showing an arrangement of the terminal device 2 of FIG. 1;
FIG. 4 is a flowchart showing an operation executed in response to a reception of a call from a user;
FIG. 5 is a schematic diagram showing the operations executed by the controller 406 of the center apparatus 4 and the CPU 220 of the terminal device 2 in accordance with a first embodiment of the invention;
FIG. 6 is a schematic diagram showing the operations executed by the controller 406 of the center apparatus 4 and the CPU 220 of the terminal device 2 in accordance with a second embodiment of the invention;
FIG. 7 is a diagram illustrating how information on the options is given to the user in a menu selection in the first embodiment of FIG. 5;
FIG. 8 is a schematic diagram showing the operations executed by the controller 406 of the center apparatus 4 and the CPU 220 of the terminal device 2 in accordance with a third embodiment of the invention;
FIG. 9 is a diagram illustrating how information on the options is given to the user in a menu selection in the second embodiment of FIG. 6;
FIG. 10 is a diagram illustrating how information on the options is given to the user in a menu selection in the third embodiment of FIG. 8;
FIG. 11 is a schematic block diagram showing an arrangement of a terminal device 2a that includes the IVR program in accordance with a fourth embodiment of the invention; and
FIG. 12 is a schematic block diagram showing an arrangement of a stand alone device 2b that includes the IVR program in accordance with a fifth embodiment of the invention.

Throughout the drawing, the same elements when shown in more than one figure are designated by the same reference numerals.

### DETAILED DESCRIPTION OF ILLUSTRATIVE EMBODIMENTS

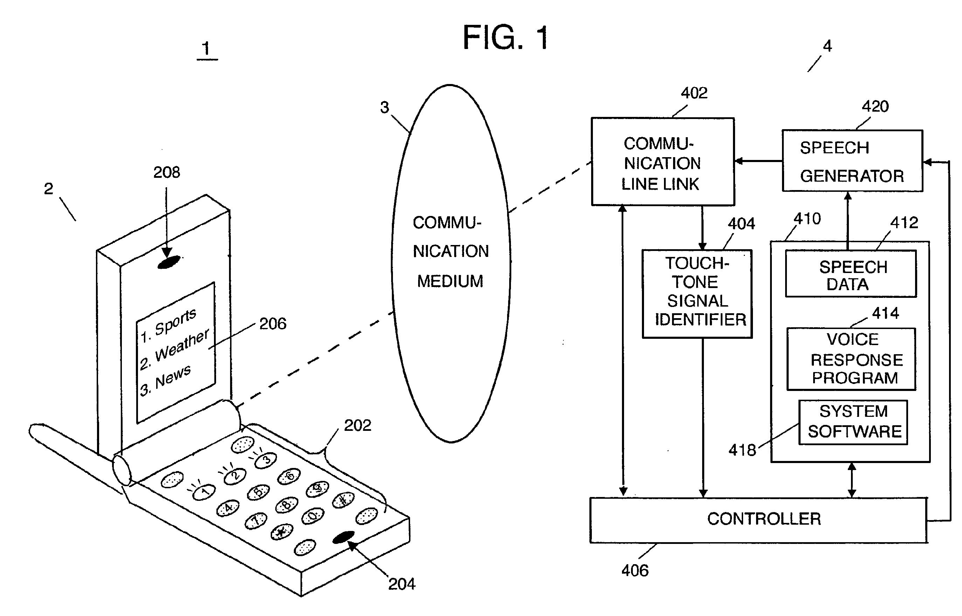

FIG. 1 is a schematic diagram showing an exemplary interactive voice response (IVR) system of the invention. In FIG. 1, the IVR system 1 comprises a user's terminal device (or a calling party) 2 that has a communication capability either by a line or by radio; an IVR center apparatus (or called party) 4 for providing IVR services; and a communication medium 3 that enables communicates between the calling party 2 and the called party 3.

The IVR center apparatus 4 comprises a communication line link for providing the apparatus 4 with a telephone communication capability through the communication medium 3; a touch-tone signal identifier 404 for identifying the received touch tones from the communication line link 402; a controller for controlling the entire apparatus 4; a storage device 410 for storing various data and programs used for the operation of the apparatus 4; and a speech generator 420 for generating a speech signal.

The storage device 410 stores speech data 412 for use in the speech generator 420; an interactive voice response (IVR) program 414 according to the present invention; system software 418 comprising fundamental programs such as a suitable operating system, and other programs for establishing a call in response to an incoming call, disconnecting the call, converting a given text into a speech by using the speech generator 420, transmitting data received from the IVR program 414 to the calling party 2, and so on.

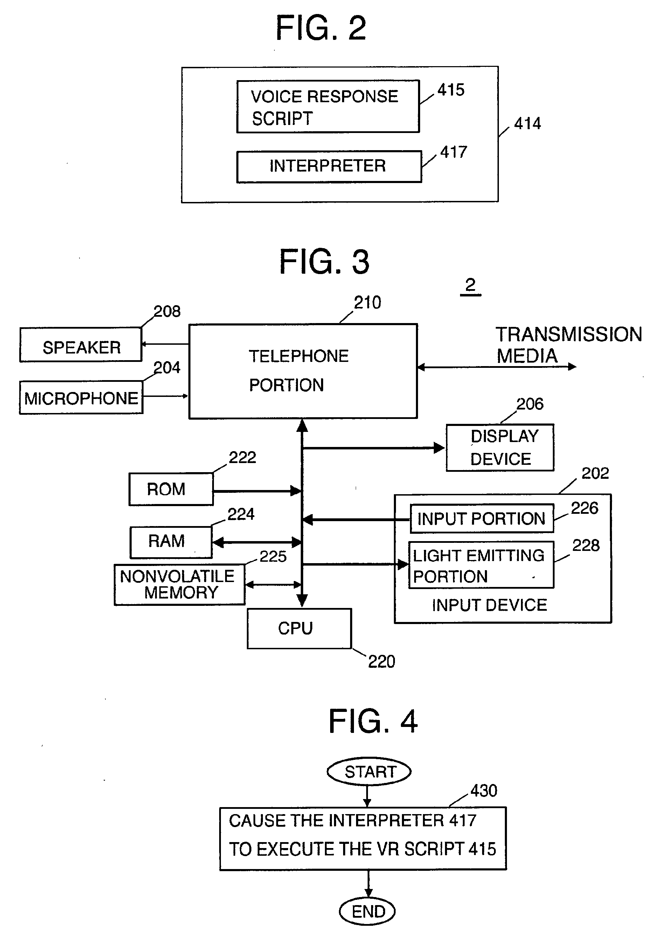

The IVR program 414 can be implemented by using a general purpose programming language. However, the IVR program 414 is preferably realized by an interactive voice response application (IVRA) programming language dedicated for creating audio dialogs that include synthesized speech, digitized audio, recognition of spoken and DTMF key input, recording of spoken input, telephony, and mixed-initiative conversations. FIG. 2 shows an exemplary structure of a voice response program 414 of FIG. 1. In FIG. 2, the IVR program 414 comprises an IVR script or document 415 written in any IVRA programming language and an interpreter 417 which interprets and executes the IVR script 415. As an IVRA programming language, there is a Voice Extensible Markup Language VoiceXML. Details for the VoiceXML can be obtained from a web page "http://www.voicexml.org/". The IVR script 415 may be developed either by using a text editor or by making a development environment dedicated for VoiceXML script development and using it.

The speech generator 420 is preferably a speech synthesizer. However, spoken speeches used in the IVR system may be stored as the speech data 412 and the speech generator 420 may simply use a necessary one from the stored speeches.

The communication medium 3 may includes any suitable communication networks such as an intranet, the Internet, wire and/or wireless telephone networks, etc. The communication medium 3 is preferably transmit voice and data.

According to the present invention, the terminal device 2 may be any suitable device (1) capable of wire or wireless communication through the transmission medium 3 with the center apparatus 4, (2) at least having an input device such as a key pad or keyboard with a plurality of keys so arranged as to be able to emit light and (3) preferably having a display screen. As long as these conditions are satisfied, the terminal device 2 may be a wire or wireless telephone device, a personal data assistant (PDA), a computer, and a wide variety of machines and devices that need to communicate with a user or a customer for providing services and/or commodities that best meet his or her needs. FIG. 3 is a schematic block diagram showing an exemplary arrangement of the terminal device 2 of FIG. 1. Referring to FIGS. 1 and 3, the terminal device 2 comprises a wire or wireless telephone portion 210; a CPU 220; a read-only memory (ROM) 222; a random access memory (RAM) 224; a nonvolatile memory 225; a display device 206; a speaker 208 and an input device 202.

A set of terminal programs and/or routines (detailed later) executed in concert with the operation of the IVR center apparatus 4 are preferably stored in the nonvolatile memory 225 such as a flash memory, a hard disc, etc.

The terminal program set is typically stored in a world-wide web (WWW) server by a service provider, and is obtained by the terminal device 2 by means of the http (Hyper Text Transfer Protocol). Alternatively, the terminal program set may be obtained by using other means such as the FTP (File Transfer Protocol). Further, a service provider may send the terminal program set to the terminal device 2 via on line or off line.

The input device 202 may be any suitable one that includes keys frequently used in the IVR system: e.g. ten keys 0 through 9 and "#" and "*" keys. The input device 202 comprises an input portion 226 for providing a code associated with the key pressed by the user, and a light emitting portion 228 for enabling each of those frequently used keys to emit light in response to a control signal provided by the CPU 220.

### Operation of the IVR System

The user of the device 2 dials the center apparatus 4. In response to the ringing caused by the dialing, the controller 406 establishes the connection and controls the interpreter 417 to execute the interactive voice response script 415 in step 430 as shown in FIG. 4. Then, the interpreter 417 interprets and executes the IVR script 415, which includes one or more menu portion in which menu options are presented to the user of the terminal device 2 and the user is prompted to select one of the menu options.

In the following description, we use the above-mentioned VoiceXML as an example of an IVRA programming Language. Two examples of menus scripts written in the VoiceXML are shown in the following.

### Example 1

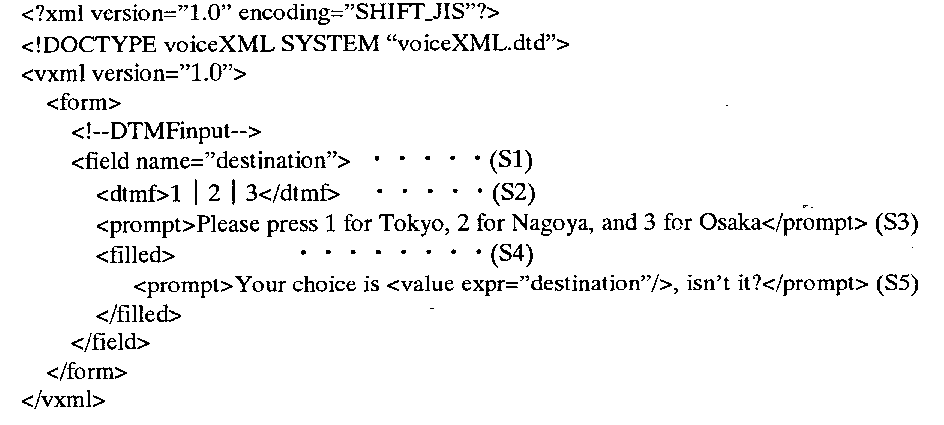

This is an example that uses a <dtmf> element. In example 1, a step S1 declares the beginning of inputting into a variable "destination". The keys acceptable as an input are specified in step S2. In this specific example, Keys "1", "2" and "3" are specified. Step S3 outputs the audio guide of the potions of the menu. Step S4 declares the operation when a key input is accepted. Step S5 repeats the destination associated with the input key.

### Example 2

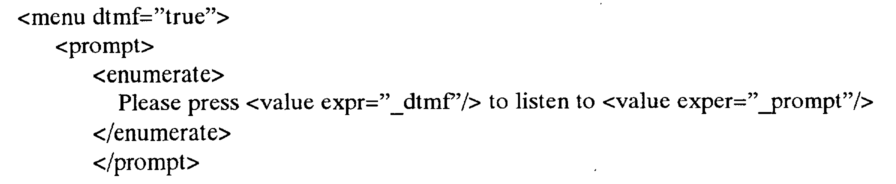

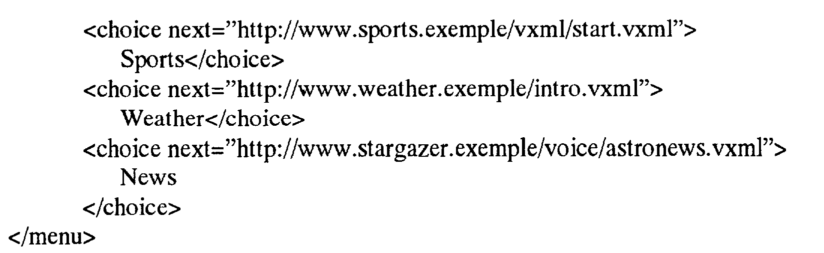

This is an example that uses an <enumerate> element. In the VoiceXML, the <enumerate> element makes it possible to briefly express an operation executed for each of the enumerated candidates for acceptable keys or for words or phrases used in speech recognition. In this specific example, a portion between <prompt> and </prompt> outputs an audio guide "Please press 1 to listen to Sports; Please press 2 to listen to weather; Please press 3 to listen to News".

According to the present invention, the above-mentioned voice response program 414 is realized by appropriately arranging a speech output function execution portion, of a standard interpreter, that is dedicated to the menu option audio output in a menu portion of an IVR script. Therefore, in case of the VoiceXML,
(1) what has to be done is only to appropriately arrange the execution portion, of the interpreter 417 of FIG. 2, for a <form> that includes a <dtmf> statement in an IVR script 415; and
(2) what has to be done is only to appropriately arrange the execution portion, of the interpreter 417, for the <menu> statement that includes an <enumerate> statement of an IVR script 415.

### Embodiment 1

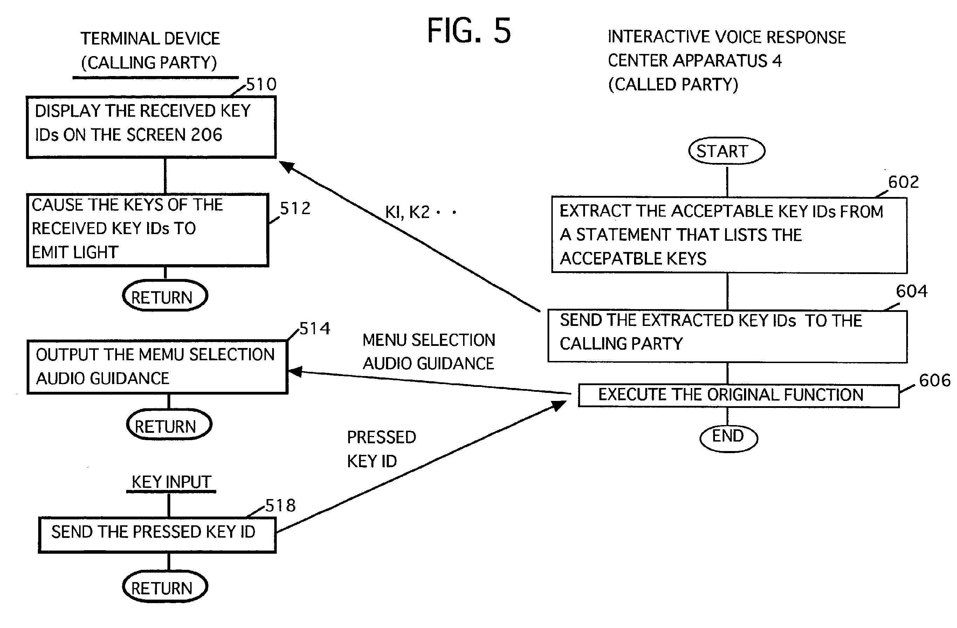

FIG. 5 is a schematic diagram showing the operation of the interpreter 417 executed by the controller 406 in a menu portion of the interactive voice response script 415 and the operation executed by the CPU 220 in concert with the operation of the interpreter 417.

An interactive voice response service usually includes one or more audio menus of options. Accordingly, the IVR script 415 includes one or more menus portions that correspond to the audio menus. Each of the menu portions typically comprises a menu selection audio guide output statement for presenting, in voice, the options of the menu (OP1, OP2, ... ) and respective key IDs or numbers (K1, K2, ....) to the calling party and an input key data receiving routine for receiving the ID or number of key pressed by the user.

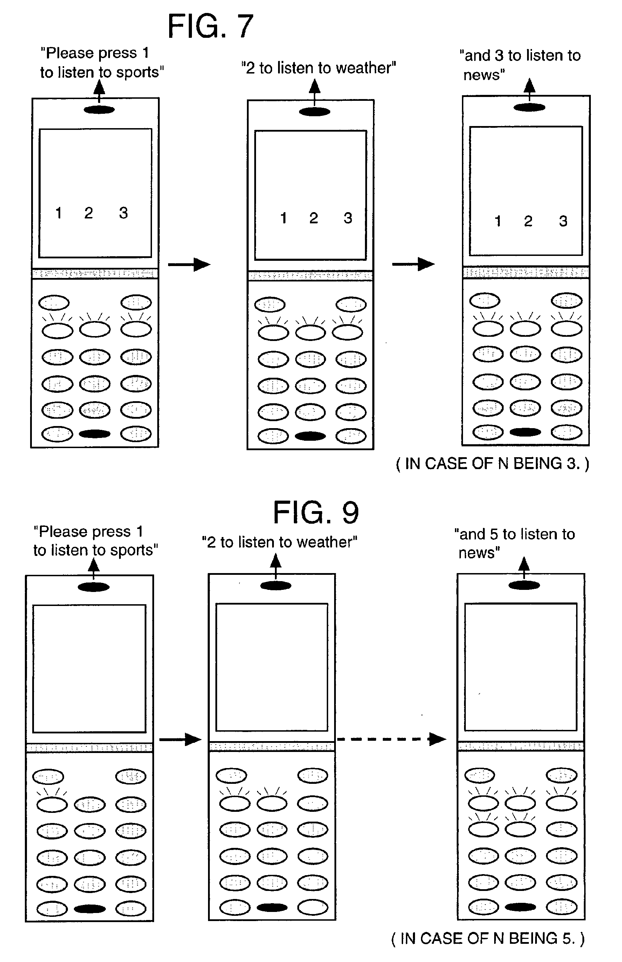

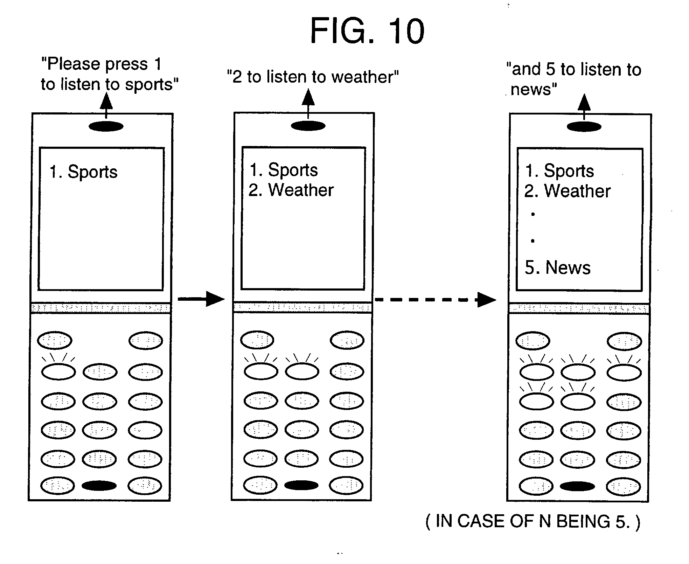

Each of menu options, a key ID for the menu option, or a combination of the menu option and the key ID is referred to as "option information" of the menu option. In the right column of FIG. 5, shown is the operation of a speech output function execution portion, of the interpreter, that is dedicated to the menu option audio output in a menu portion of an IVR script. In other words, if the parser of the interpreter 417 determines that a <form> statement includes a <dtmf> statement (referred to as "the <dtmf> case") or a <menu> statement includes an <enumerate> statement (referred to as "the <enumerate> case") of an IVR script 415, then the interpreter 417 executes the operation of FIG. 10 as the <form> statement execution or the <menu> statement execution. In FIG. 10, step 602 extracts the acceptable key IDs and the corresponding menu options either from the <dtmf> statement in the <dtmf> case or from the <choice> statements in the <enumerate> case. Step 604 sends the extracted key IDs to the calling party 2. This causes the CPU 220 of the calling party 2 to display the received key IDs on the display screen 206 in step 510. Then, the CPU 220 causes the keys identified by the received key IDs to emit lights in step 512 and returns to a program in the system software 418. In this way, while the acceptable key IDs are displayed on the screen 206, the corresponding keys emit lights as shown in FIG. 7.

Following the key ID sending step 604, the called party 4 (or the controller 406) interprets and executes the original function: i.e., the <prompt> statement or the <menu> statement in step 606. This causes the menu selection audio guidance to be transmitted to the calling party 2.It should be noted that though the step 604 is shown as sending data to the calling party 2, the step 604 have not necessarily to send data; rather the step 604 may simply pass the data to the system software 406, which in turn sends the data to the calling party 2 through the communication line link 402 as is well known to those skilled in the art. In response to the reception of the menu selection audio guide signal, the CPU 220 outputs the menu selection audio guide through the speaker 208 in step 514 and returns to a program in the system software 418.

Thus, the menu option display on the screen 206, light emission from selectable keys 202 and the menu selection audio guide make the menu option selection easier. If any key is pressed, the CPU 220 sends the ID of the pressed key to the called party 4 in step 518. Responsively, the controller 406 receives the pressed key, and thereafter continues the execution of the rest of the IVR program 414.

It should be noted that it is not necessary to make any special arrangement to the IVR script 415. If an existing IVR script written in the VoiceXML is executed with the inventive interpreter 417 in the IVR center apparatus 4, then the IVR system 1 works normally exhibiting the above- and below- described effects.

### Embodiment II

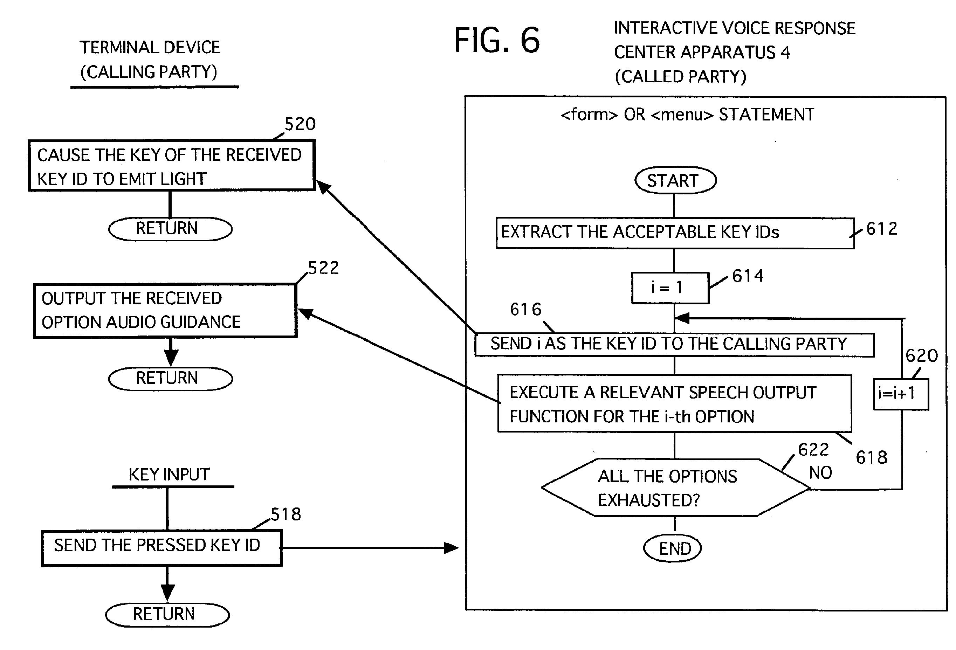

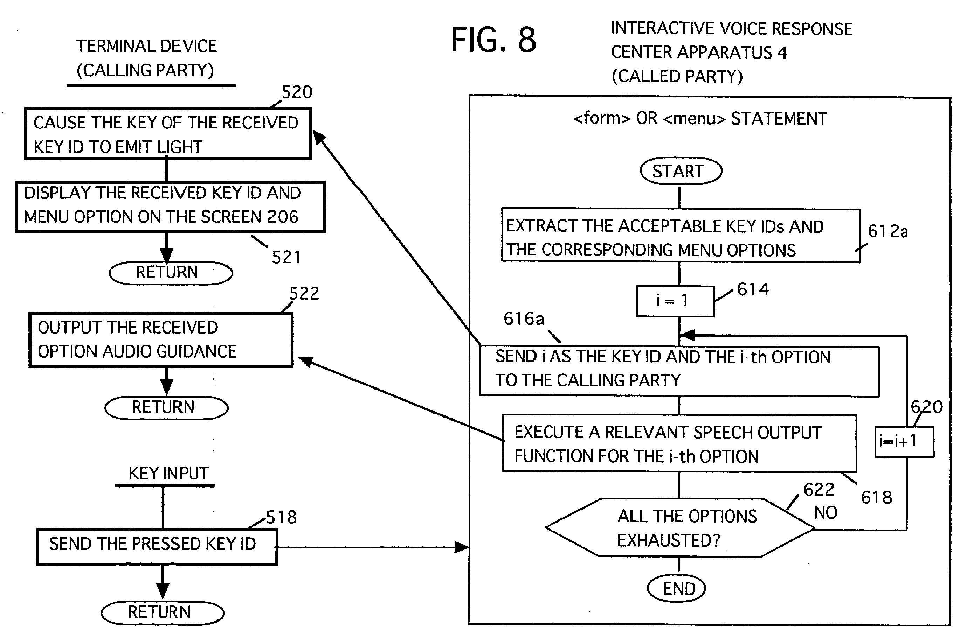

FIG. 6 is a schematic diagram showing the operation of the interpreter 417 executed by the controller 406 in a menu portion of an interactive voice response script 415 and the operation executed by the CPU 220 in concert with the operation of the interpreter 417in accordance with a second illustrative embodiment of the invention. If the parser of the interpreter 417 determines that a <form> statement includes a <dtmf> statement (referred to as "the <dtmf> case") or a <menu> statement includes an <enumerate> statement (referred to as "the < enumerate> case") of an IVR script 415, then the interpreter 417 executes the operation of FIG. 6 as the <form> statement execution or the <menu> statement execution.

According to the second illustrative embodiment of the invention, the interpreter 417 is arranged such that for each of the menu option, a key ID corresponding to the menu option is transmitted from the called party 4 to the calling party 2 and subsequently the audio guide for the menu option is transmitted.

Specifically, in the following description, it is assumed that the menu has N options and that an original menu selection audio guide goes "Please press 1 to listen to sports, 2 to listen to weather, ....and N to listen to news". In FIG. 6, step 612 extracts the acceptable key IDs from the <dtmf> statement in the <dtmf> case or from the <choice> statements in the < enumerate> case. Step 614 sets a variable i to 1. Step 616 sends i as the key ID to the calling party 2. Step 618 executes a relevant speech output function for the i-th option. A decision step 622 makes a test to see if all the options have been exhausted. If not, the control is passed to step 620, which increments the variable i; and then the control is returned to step 616. If all the options have been exhausted in step 622, the operation ends.

On the other hand, in the calling party 2, in response to a reception of each key ID from the key ID sending step 616, the CPU 220 executes a subroutine 520 to cause the key of the received key ID to emit light. Also, in response to a reception of each (i-th) option audio guide from the menu option sending step 618, the CPU 220 executes a subroutine 522 to output the received option audio guide through the speaker 208. If any key is pressed, the CPU 220 sends the ID of the pressed key to the called party 4 in step 518. Responsively, the controller 406 receives the pressed key, and thereafter continues the execution of the rest of the IVR program 414.

Through the above-described operation, just before an audio guide for each menu option is given, the key for the menu option starts emitting light as shown in FIG. 9. This also facilitates the menu option selection.

### Embodiment III

FIG. 8 is a schematic diagram showing the operation of the interpreter 417 executed by the controller 406 in a menu portion of an interactive voice response script 415 and the operation executed by the CPU 220 in concert with the operation of the interpreter 417 in accordance with a third illustrative embodiment of the invention. If the parser of the interpreter 417 finds an occurrence of the <dtmf> case or the < enumerate> case in an IVR script 415, then the interpreter 417 executes the operation of FIG. 8 as the <form> statement execution or the <menu> statement execution.

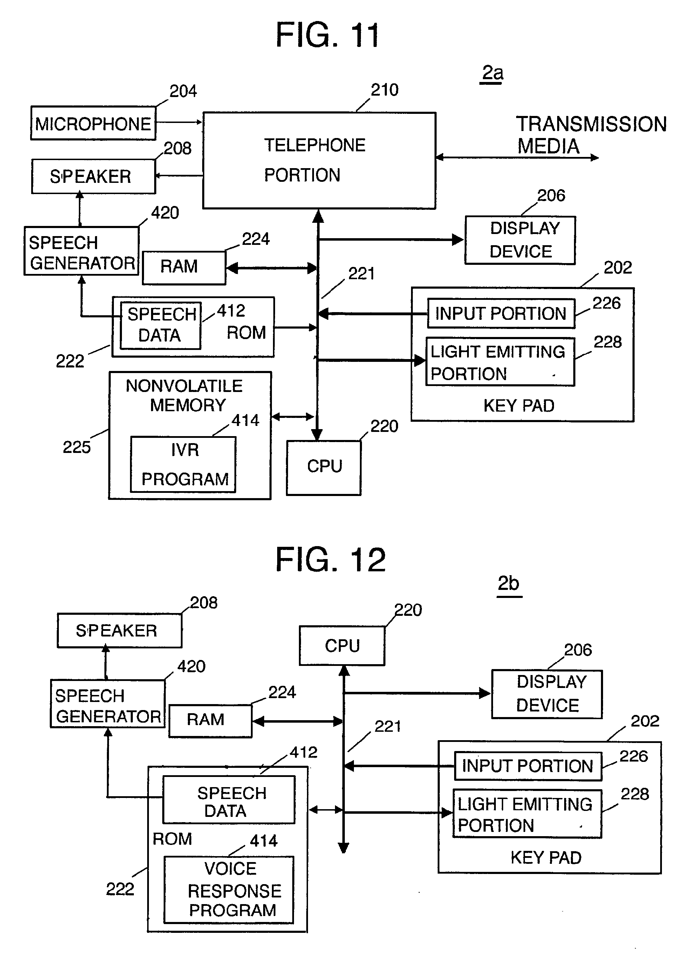

The flowchart of FIG. 8 is identical to that of FIG. 6 except that steps 612 and 616 have been replaced with steps 612a and 616a in FIG. 12. Specifically, step 612a extracts the acceptable key IDs and the corresponding menu options from the <dtmf> statement in the <dtmf> case or from the <choice> statements in the < enumerate> case. Step 616a sends i as the key ID and the i-th option to the calling party 2.

Also, the program configuration of the terminal device 2 shown in FIG. 8 is identical to that shown in FIG. 6 except that a step 521 has been added after the step 520 in FIG. 8. Specifically, following the step 520, the CPU 220 executes the step 521 to display the received key ID and the corresponding menu option on the display screen 206.

FIG. 10 is a diagram illustrating how information on the options is given to the user in a menu selection in the third embodiment of FIG. 8. As shown in the figure, just before an audio guide for each menu option is given, the display of the key ID and the menu option on the screen 206 starts and the key for the option starts emitting light. This further facilitates the menu option selection.

In the above-described embodiments, the terminal device 2 has permitted the user's selection operation only after completing the audio guides of all the potions. However, the user's selection operation may be done in an earlier stage of the menu selection procedure. For example, the terminal device 2 may be so arranged as to accept the key input at any time during each menu procedure by making the key transmission step 518 an interrupt subroutine called in response to a key input. This provides a most effective IVR service to those who frequently utilizes the same service of the called party 4.

### Embodiment IV

FIG. 11 is a schematic block diagram showing an arrangement of a terminal device 2a that includes the IVR program in accordance with a fourth embodiment of the invention. The terminal device 2a is identical to the device 2 except that a ROM 222 has stored the speech data 412; the voice response program 414 has been stored in the nonvolatile memory 225; and the speech generator 420 has been added in FIG. 11. In this arrangement, the voice response program 414 is preferably obtained by downloading from the service provider. In response to a detection of a call origination to a center apparatus (not shown), the system controls the interpreter 417 to execute the IVR script 415. The ID of the key presses by the user in menu option selection is transmitted to the not-shown center apparatus. The user can get service or information identified by a selection path from the not shown center apparatus.

### Embodiment V

The invention can be applied to a stand-alone device or machine as shown in FIG. 12. In FIG. 12, the device 2b is identical to the terminal device 2a except that the telephone portion 210 and the microphone 204 has been removed and the contents of a ROM or any other storage device 222 has been changed according to the application of the device 2b. In this embodiment, the manufacturer of the device 2b preferably installs the IVR program 414 in the storage device 222. Though the IVR subsystem does not need communication means, the device 2b may provided with any communication means.

Executing an IVR script 415 by using an interpreter 417 arranged as shown in FIG. 8 yields the same result as in case of the third illustrative embodiment. It should be noted that it is not necessary to make any special arrangement to the IVR script 415.

Many widely different embodiments of the present invention may be constructed without departing from the scope of the present invention. It should be understood that the present invention is not limited to the specific embodiments described in the specification, except as defined in the appended claims.

## Claims

1. A center apparatus for providing an interactive voice response associated with a key input by a user at a terminal device via communication medium, the center apparatus comprises:
means for communicating with said terminal device;
voice sending means for send a voice signal corresponding to a given data to said terminal device through said communication means;
means for storing a voice response script that describes a procedure of said interactive voice response, said voice response script including at least one menu portion which permits the user to select one of menu options; and
means for storing software means for interpreting and executing said voice response script, and
control means responsive to a call from said terminal device for establishing said call and controlling said software means to execute said voice response script, said software means including:
audio guide sending means for causing an audio guide for one of said at least one menu to be transmitted to said terminal device, said audio guide comprising audio option guides for menu options of said one menu; and
option sending means for extracting option information for each menu option from said menu portion and causing said extracted option information to be transmitted to said terminal device,
whereby said terminal device can display said extracted option information for each menu option on a display screen and cause the keys identified by respective key IDs included in said option information to emit lights.

2. A center apparatus as defined in claim 1, wherein said option sending means extracts a key ID for each menu option prior to said audio guide sending means .

3. A center apparatus as defined in claim 1, wherein said audio guide sending means includes option guide sending means for causing said audio option guide for one of said menu options to be transmitted, and
wherein said option sending means includes means, activated prior to said option guide sending means, for extracting a key ID associated with said one of said menu options,
whereby said terminal device can cause a key of said key ID associated with said one of said menu options to emit light before putting out said audio option guide for one of said menu options.

4. A center apparatus as defined in claim 1, wherein said audio guide sending means includes audio option sending means for causing said audio option guide for one of said menu options to be transmitted to said terminal device, and
wherein said option sending means includes means, activated prior to said audio option sending means, for extracting said one of said menu options and a key ID associated with said one of said menu options,
whereby said terminal device can cause a key of said key ID associated with said one of said menu options to emit light and display said key ID and said one of said menu options before putting out said audio option guide for one of said menu options.

5. A center apparatus as defined in claim 1, wherein said audio guide sending means includes audio option sending means for causing said audio option guide for one of said menu options to be transmitted to said terminal device, and wherein said option sending means includes:
means for extracting all of said key IDs at a time; and
means, activated prior to said audio option sending means, for causing one of said extracted key IDs for said one of said menu options to be transmitted to said terminal device.

6. A center apparatus as defined in claim 1, wherein said voice response script is written in a language VoiceXML, wherein said option information for each menu option includes a key ID for the menu option, and wherein said option sending means includes means for extracting said key ID for each menu option from a <dtmf> statement. from a <choice> statement for the menu option

7. A center apparatus as defined in claim 3, wherein said voice response script is written in a language VoiceXML, wherein said option information for each menu option includes a key ID for the menu option, and wherein said option sending means includes means for extracting said key ID for each menu option from a <choice> statement for the menu option.

8. A center apparatus as defined in claim 4, wherein said voice response script is written in a language VoiceXML, wherein said option information for each menu option includes the menu option and a key ID for the menu option, and wherein said option sending means includes means for extracting each menu option and said key ID for each menu option form a <choice> statement for the menu option.

9. A communication device capable of communicating a voice and data with an apparatus for interactively providing a voice response associated with one of menu options of one of at least one menu, the communication device comprising:
means for dialing a desired destination, said dialing means including an input device having a plurality of keys, said keys being so arranged as to emit lights in response to a control signal;
a display device for displaying at least characters;
audio output means for providing an audio output in response to a given signal;
receiving means for receiving menu options of said one menu and corresponding key IDs; and
displaying means for displaying said menu options and said corresponding key IDs on said display device;
light emitting means for causing keys of said corresponding key IDs to emit lights; and
means, responsive to an input of one of said plurality of keys, for sending a signal associated with said one key to said apparatus.

10. A communication device as defined in claim 9, wherein said displaying means and said light emitting means operate on receiving said menu options of said one menu and said corresponding key IDs.

11. A communication device as defined in claim 9, wherein said receiving means includes second receiving means for receiving a key ID associated with said one of said menu options from said apparatus;
wherein said light emitting means includes means, responsive to said second receiving means, for causing a key identified by said key ID to emit light, and
wherein the communication device further comprises means, responsive to a reception of an audio option guide for one of said menu options, for outing out said audio option guide through said audio output means.

12. A communication device as defined in claim 9, wherein said receiving means includes second receiving means for receiving said one of said menu options and a key ID associated with said one of said menu options from said apparatus;
wherein said light emitting means includes means, responsive to said second receiving means, for causing a key identified by said key ID to emit light, and
wherein said displaying means includes means, responsive to said second receiving means, for displaying said one of said menu options and said key ID on said display device.

13. A communication device as defined in claim 12, further comprising:
means, responsive to a reception of an audio option guide for one of said menu options, for outing out said audio option guide through said audio output means.

14. A communication device capable of communicating a voice and data with an apparatus for interactively providing a voice response associated with one of menu options of one of at least one menu, comprising:
a speaker;
a display device for displaying at least characters;
means for dialing a desired destination, said dialing means including at least a ten key pad having a plurality of keys, said keys being so arranged as to emit lights in response to a control signal;
means for storing a voice response script that describes a procedure of said interactive voice response, said voice response script including at least one menu portion which permits the user to select one of menu options;
means for storing software means for interpreting and executing said voice response script; and
control means activated in response to a detection of a call origination to the center apparatus for controlling said software means to execute said voice response script, said software means including:
means for causing an audio guide for one of said at least one menu to be output through said speaker, said audio guide comprising audio option guides for menu options of said one menu; and
means for extracting option information for each menu option from said menu portion;
means for displaying said extracted option information on said display device;
means for causing keys identified by said extracted option information to emit lights; and
means, responsive to an input of one of said plurality of keys, for sending a signal associated with said one key to said apparatus.

15. A device that operates so as to meet the user's needs through a dialogue with the user, the device comprising:
a speaker;
a display device for displaying at least characters;
means for inputting data, said inputting means including at least a ten key pad having a plurality of keys, said keys being so arranged as to emit lights in response to a control signal;
means for storing a voice response script that describes a procedure of said interactive voice response, said voice response script including at least one menu portion which permits the user to select one of menu options;
means for storing software means for interpreting and executing said voice response script, and
control means for controlling said software means to execute said voice response script, wherein said software means includes:
means for causing an audio guide for one of said at least one menu to be output through said speaker, said audio guide comprising audio option guides for menu options of said one menu;
means for extracting said option information for each menu option from said menu portion;
means for displaying said option information for each menu option on said display device;
means for causing keys identified by said extracted option information to emit lights; and
means, responsive to an input of one of said plurality of keys, for using said input for operation of the device.
